# EUROPEAN PATENT SPECIFICATION

(11) **EP 3 581 499 B1**
(45) Date of publication and mention of the grant of the patent: **19.01.2022**
(21) Application number: 19177690.5
(22) Date of filing: 31.05.2019
(51) Int. Cl.: B64D 33/02, F02C 7/042

(54) **GAS TURBINE ENGINE**
GASTURBINENMOTOR
TURBINE À GAZ

(30) Priority: 15.06.2018 GB 201809823; 24.09.2018 GB 201815495
(43) Date of publication of application: 18.12.2019
(73) Proprietor: Rolls-Royce plc, London N1 9FX (GB)
(72) Inventor: Sheaf, Christopher, Derby, Derbyshire DE24 8BJ (GB); Stretton, Richard, Derby, Derbyshire DE24 8BJ (GB); Lim, Chia Hui, Derby, Derbyshire DE24 8BJ (GB)
(74) Representative: Rolls-Royce plc

(56) References cited:
- GB-A- 2 259 114
- US-A- 4 449 683
- US-A- 5 058 617
- US-A1- 2005 022 866
- US-A1- 2015 285 144

## Description

### Technical Field

The present disclosure relates to a gas turbine engine for installation on one side of an aircraft and an aircraft comprising the gas turbine engine.

### Background

Gas turbine engines for aircraft generally comprise air intakes. The purpose of an air intake is to direct air flow into the gas turbine engine with the least amount of flow distortion across a range of operating conditions. These conditions include a range of cross wind conditions while the aircraft is on the ground, and incidence conditions during aircraft take-off and climb. It is known to optimise the geometry of intakes for gas turbine engines for expected cross wind and incidence conditions. It is also known to optimise the performance of a gas turbine engine mounted on the wing of an aircraft by toeing-in the intake of the engine so that the intake is optimally oriented to the aircraft flow field at the intake during operation of the aircraft. However this results in the exhaust direction of the engine not being exactly parallel to the centreline of the aircraft, causing a reduction in thrust specific fuel consumption.

United States Patent No. 4,449,683 describes a nacelle mounted by a pylon below and forwardly of a wing of an aircraft. The nacelle has a critical surface portion which is an upper side surface portion adjacent to a forwardly swept portion of the wing. The critical surface portion of the nacelle is shaped to be in alignment with a plurality of airfoil streamlines that are immediately adjacent to the critical surface portion. Other surface portions of the nacelle are out of alignment with adjacent streamlines and correspond more closely to the engine structure contour.

United Kingdom Patent Application GB 2259114 A describes a gas turbine engine nacelle. During aircraft cruise, the centreline axis of the engine is disposed at an engine angle of attack α_{E}. The inlet of the engine is drooped with a droop axis forming an angle α_{D} so that the droop axis aligns with the incoming airflow during cruise.

United States Patent No. 5,058,617 describes a nacelle inlet for channelling airflow to a gas turbine engine. A diffuser is disposed in fluid communication with the inlet face, with the diffuser defined about a droop axis inclined relative to the engine centreline axis.

### Summary

The present disclosure provides a gas turbine engine and an aircraft as set out in the appended claims.

According to a first aspect there is provided a gas turbine engine comprising a pylon attachment, a shaft defining an engine centreline which lies in an engine central plane intersecting the pylon attachment, a fan defining a fan plane normal to the engine centreline and an intake upstream of the fan plane, the intake defining a geometric centreline, wherein the geometric centreline of the intake coincides with the engine centreline at an axial position corresponding to the downstream end of the intake and curves, in a plane of curvature, away from the engine centreline upstream of said axial position. The engine central plane is either normal to the plane of curvature or inclined to a plane normal to the plane of curvature by an angle less than or equal to 30°.

The geometric centreline of the intake may be inclined at an angle of at least 0.5° to the engine centreline at a point where the geometric centreline of the intake intersects the highlight plane of the intake.

The engine may further comprise a nacelle enclosing a fan case, the intake being mounted to the fan case so that an external profile of the nacelle corresponds to an external profile of the intake at an interface between them. The nacelle may have a profile at the interface which is non-symmetrical such that the nacelle is handed.

According to a second aspect, there is provided an aircraft having an aircraft centre line and comprising left and right gas turbine engines each of which is in accordance with the first aspect, and wherein, for each engine, a unit vector parallel to the geometric centre line of the intake at the intersection of the geometric centreline with the highlight plane, and having a component parallel to the aircraft centreline in the upstream direction of the aircraft, also has a component directed towards and normal to a vertical plane through the aircraft centreline.

The left and right gas turbine engines may be mounted to the aircraft such that the engine centreline of each engine is substantially parallel to the aircraft centreline.

Alternatively, the left and right gas turbine engines may be mounted to the aircraft such that, for each engine, a unit vector which is parallel to the engine centre line and in the downstream direction of the engine has a component directed towards a vertical plane through the aircraft centreline.

The intakes of the left and right gas turbine engines may be mirrored about a vertical plane through the aircraft centreline.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Utip. The work done by the fan blades 13 on the flow results in an enthalpy rise dH of the flow. A fan tip loading may be defined as dH/Utip2, where dH is the enthalpy rise (for example the 1-D average enthalpy rise) across the fan and Utip is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg-1K-1/(ms-1)2). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described herein may be less than (or on the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described herein may have any desired maximum thrust. Purely by way of non-limitative example, a gas turbine as described herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.
The gas turbine engines described herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Specific Description

Embodiments will now be described by way of example only, with reference to the accompanying Figures, in which:
- Figure 1: is a sectional side view of a gas turbine engine;
- Figure 2: is a close up sectional side view of an upstream portion of a gas turbine engine;
- Figure 3: is a partially cut-away view of a gearbox for a gas turbine engine;
- Figure 4: schematically shows a plan cutaway view of a gas turbine engine with a handed intake, according to an example;
- Figure 5: is a front view of engine with a handed intake, according to another example; and
- Figures 6 & 7: schematically show plan views of aircraft according to examples, each having two gas turbine engines with handed intakes.

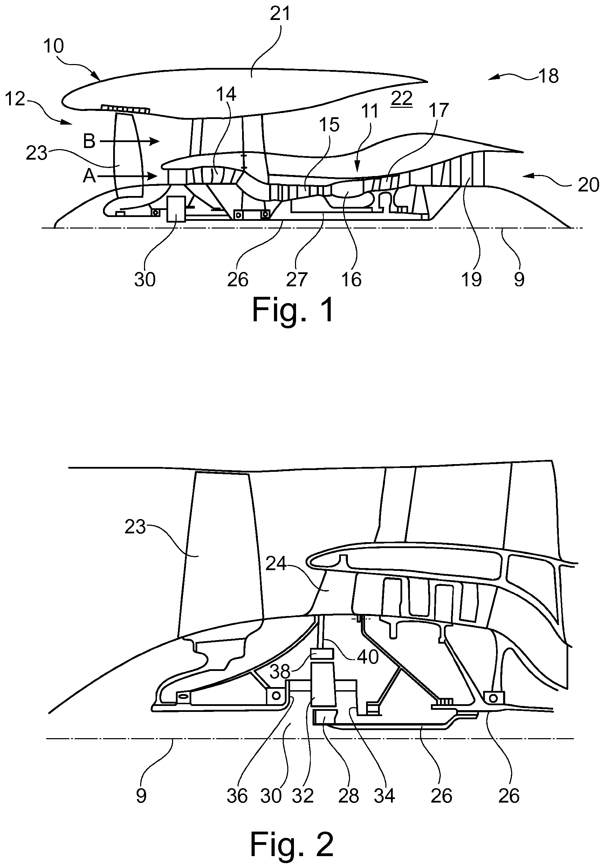

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

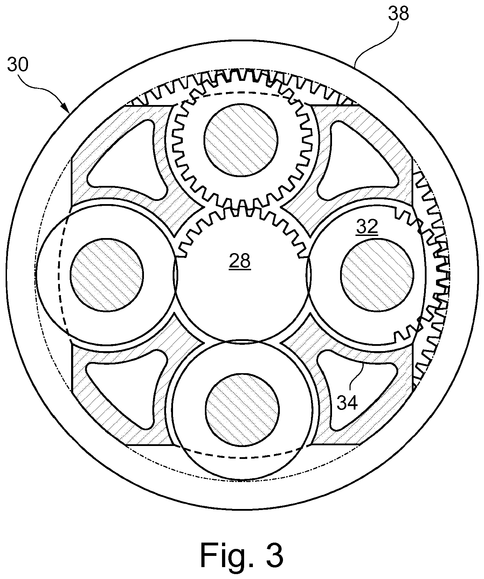

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are possible. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

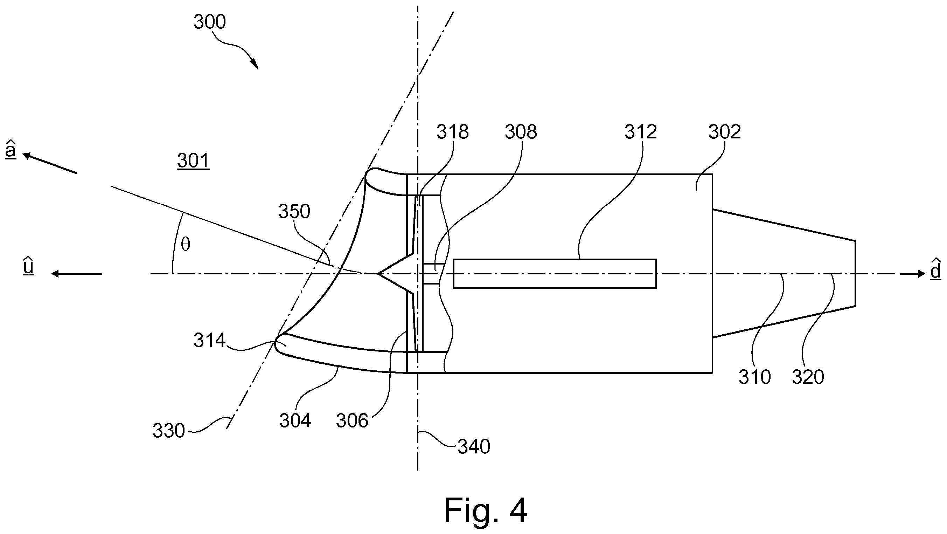

**Figure 4** shows a cutaway view of a handed gas turbine engine 300 according to an example, for installation on one side of an aircraft. The handed gas turbine engine 300 comprises a nacelle 302 enclosing a fan case (not shown) and an intake 304.

In this simplified example, the nacelle 302 appears cylindrical (i.e. it has a circular external profile), but in other examples it may be non-cylindrical. The nacelle 302 encloses a core of the engine 300 including a shaft 308 on which a fan 318 is mounted. The shaft 308 defines an engine centreline 310. Upstream **û** and downstream **d̂** directions of the engine 300 are mutually anti-parallel and parallel to the engine centreline 310. The fan 318 is located on an upstream end of the shaft 308, and defines a fan plane 340, which is normal to the engine centreline 310. The intake 304 is mounted to the fan case at an upstream end of the fan case, and the intake 304 and nacelle 302 meet at an interface 306. The interface 306 is located at an axial position corresponding to the downstream end of the intake 304.

The intake 304 has a non-axisymmetric geometry at an upstream end of the intake 304 which is configured to provide optimised cross wind and incidence performance when mounted to an aircraft on a specific (i.e. predetermined) side of an aircraft and in a specific (i.e. predetermined) angular orientation. The performance of the intake may improve as its angular orientation in use approaches the predetermined angular orientation. The external profile of the intake 304 at the interface 306 is circular and corresponds to the external profile of the nacelle 302 at the interface 306 (which is also circular), so as to provide a smooth transition between the intake 304 and the nacelle 302 at the interface 306. In examples with non-cylindrical nacelles, the profile of the nacelle at the interface may nevertheless be circular. An intake typically comprises an outer cowl surface and an internal diffuser surface.

In some examples, the intake may define a non-circular or non-symmetrical profile at the interface. In such examples, the nacelle may have a corresponding non-circular or non-symmetrical profile at the interface, such that the nacelle is handed, and to provide a smooth transition between the nacelle and the intake. The nacelle may comprise fan cowl doors which define the external profile of the nacelle including towards the interface which may correspond to the external profile of the intake. The term 'fan cowl doors' is intended to mean left and right panels that define the external profile of the nacelle. There may be a plurality of panels on each side. Such doors may be hinged to allow maintenance of internal components.

The nacelle 302 comprises a pylon attachment 312 for attaching the nacelle 302 to an aircraft. The pylon attachment 312 extends parallel to the engine centreline 310. The engine centreline 310 lies in an engine central plane 320 which intersects the pylon attachment 312 such that the engine central plane 320 bisects the portion of the gas turbine engine 300 downstream of the interface 306 through the pylon attachment 312. The engine central plane 320 is normal to the plane of Figure 4.
The intake 304 defines a lip 314 around an upstream end of the intake 304. A locus of the extreme upstream points of the lip 314, with respect to the engine centreline 310 at each angular position around the intake 304, defines an upstream highlight line. The highlight line is non-symmetrical such that the intake 304 is handed for a particular side of an aircraft. A highlight plane 330 is defined which bridges the highlight line (i.e. which touches the highlight line at multiple points but does not cross it). The term 'handed' is intended to mean a non-symmetrical left-right configuration such that the respective part or engine is adapted for use on a particular side of an aircraft.

In this example, the intake 304 extends further along the upstream direction on one side of the engine central plane 320 than on the other side of the engine central plane 320. A geometric centreline 350 of the intake 304 coincides with the engine centreline 310 at an axial position corresponding to the interface 306, and curves away from the engine centreline 310 upstream of the interface 306 to one side of the engine central plane 320 in a plane of curvature 301 (i.e. the intake 304 curves to one side of the engine central plane 320). The geometric centreline 350 may be at a central position with respect to a radially-inner surface of the intake 304. At the intersection of the geometric centre line 350 and the highlight plane 330, the geometric centre line 350 is inclined to the engine centreline 310 by an angle θ which is at least 0.5° may be a few degrees, such as between 1° and 5° for example. (In Figure 4, θ is shown exaggerated and appears as approximately 30°).

In Figure 4, the plane of curvature 301 of the geometric centreline 350 of the intake 304 is perpendicular to the engine central plane 320. In other examples, the engine central plane may be inclined by up to 30° to a plane normal to the plane 301 of curvature of the geometric centreline of the intake.

In Figure 4, **â** indicates a unit vector which is parallel to the geometric centre line 350 at a point where the geometric centreline 350 intersects the highlight plane 330 and which has a component in the upstream direction **û** of the engine 300. **â** has another component which is normal to and directed away from the engine central plane 320.

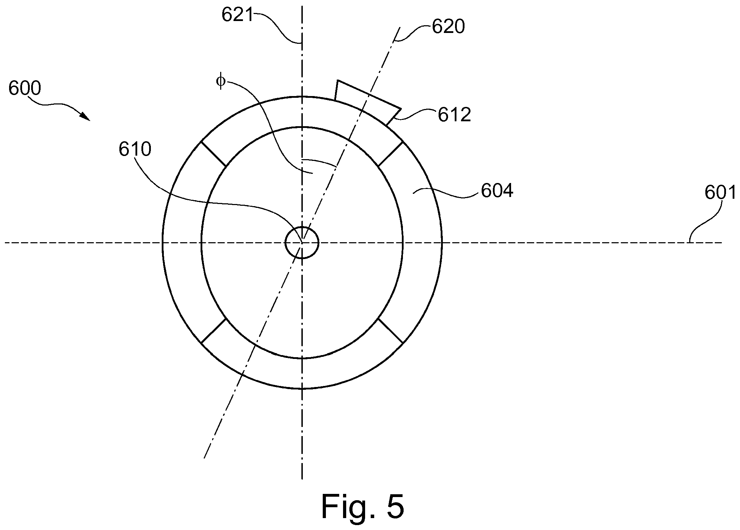

**Figure 5** shows a front view of another example engine 600 which is similar to the engine 300 of Figure 4. The engine 600 has an intake 604, a pylon attachment 612, an engine centreline 610 and an engine central plane 620. The intake 604 has a geometric centre line (not shown) which curves away from the engine centreline 610 in a plane of curvature 601. The engine central plane 620 is inclined at an angle φ to a plane 621 normal to the plane of curvature 601 of the geometric centreline, such that, viewed from the front of the engine 600, the engine central plane is offset from the plane 621 in the clockwise sense. φ may be up to 30°, for example φ may be 5°, 10°, 15°, 20°, 25° or 30°. In other examples, the engine central plane may inclined to a plane normal to the plane of curvature of the geometric centreline of the intake of the engine, such that, when viewed from the front of the engine, the engine central plane is offset in an anti-clockwise direction from the plane which is normal to the plane of curvature of the geometric centreline of the intake of the engine. The engine 600 may be adjustable so the magnitude and direction of the angle φ may be varied. For example at an interface between the intake 604 and a fan case within the nacelle of the engine, the intake 604 and the fan case may each have a respective flange each having a respective series of holes in the circumferential direction such that the intake 604 may be bolted to the fan case with any one of a large range of possible mutual angular offsets.

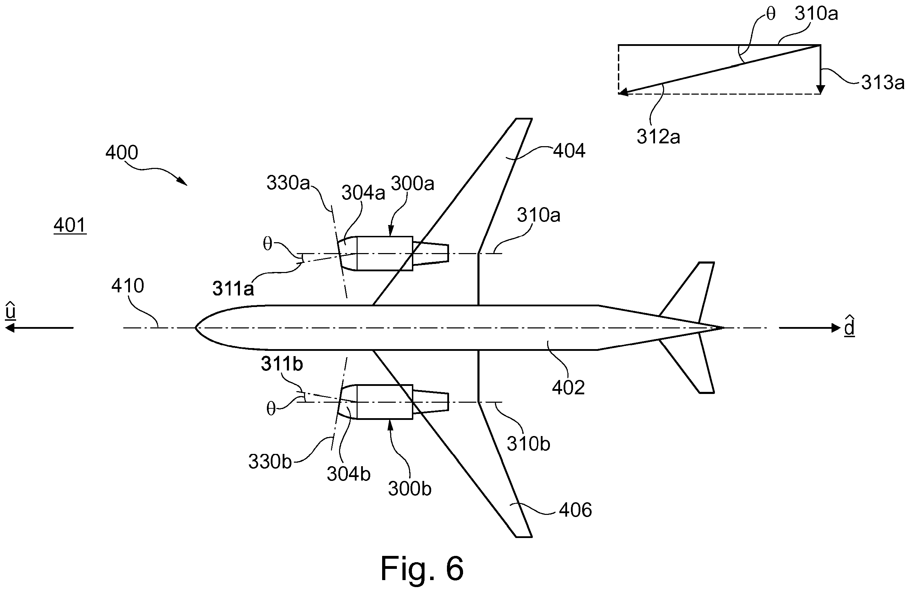

**Figure 6** shows a plan view of an aircraft 400 according to an example, the aircraft 400 having a fuselage 402, a left wing 404, a right wing 406, and left and right gas turbine engines 300a, 300b each being as described with reference to Figure 4. Upstream **û** and downstream **d̂** directions of the aircraft 400 and engines 300a, 300b are mutually anti-parallel and parallel to the centreline 410 of the aircraft 400 and to the engine centrelines 310a, 310b. The left and right gas turbine engines 300a, 300b are installed on the left and right wings 404, 406 of the aircraft 400 respectively. The left side is described with respect to a front view of the aircraft 400, although it will be appreciated that this is the pilot's right (or starboard). The left and right gas turbines engines 300a, 300b have intakes 304a, 304b respectively. The intakes 304a, 304b have respective highlight planes 330a, 330b.

The left and right gas turbine engines 300a, 300b are handed in opposing directions and are mirror images of one another about a vertical plane, fixed with respect to the aircraft 400, through the aircraft centreline 410 and coinciding with the real vertical direction when the aircraft 400 is level in flight or on the ground. The intakes 304a, 304b of the left and right gas turbine engines 300a, 300b curve in opposing directions; each curves towards the vertical plane through the aircraft centreline 410. The planes of curvature of the geometric centrelines of the intakes of the engines 300a, 300b are each parallel to a horizontal plane 401, fixed in the aircraft 400, through the aircraft centreline 410. A straight line 311a which is parallel to the geometric centreline of intake 304a at the point where the geometric centreline intersects the highlight plane 330a is inclined at the angle θ to the engine centreline 310a and to a vertical plane through the aircraft centreline 410. Similarly, a straight line 311b which is parallel to the geometric centreline of intake 304b at the point where that geometric centreline intersects the highlight plane 330b is inclined at the angle θ to the engine centreline 310b and to the vertical plane through the aircraft centreline 410.

A unit vector 312a which is parallel to the geometric centreline of the intake 304a at the point where the geometric centre line intersects the highlight plane 330a, and which has a component parallel to the upstream direction **û** also has a component 313a directed towards and normal to the vertical plane through the aircraft centreline 410.

The angle θ may be 0.5° or more, for example a few degrees, such as from 1° to 5° for example. The engine central plane of each engine may be normal to the plane 401 or alternatively the engine central planes may each be inclined by up to 30° to a plane normal to the plane 401.

Having a handed intake 304 on a gas turbine engine 300 as described means that geometry of the intake can be optimised for receiving air flow on a specific side of the aircraft, without the need to toe-in the gas turbine engine (i.e. mount the gas turbine engine at an angle about a vertical axis) such that the engine centrelines are not parallel to the aircraft centreline. The cross wind and incidence performance of the gas turbine engines 300a, 300b are improved (compared to toed-in conventional engines) because the highlight planes 330a, 330b face towards the aircraft centreline 410 (i.e. the handed inlets can capture the ideal inlet flow on each side of the aircraft to maximise aerodynamic performance of the intakes 304a, 304b), whilst the direction of the exhausts of the gas turbine engines 300a, 300b can be maintained at or near the direction **d̂** (parallel to the aircraft centreline 410), thus reducing the trade-off between improving the cross wind and incidence performance of the intake, and maintaining the thrust performance of the gas turbine engines 300 on the aircraft 400.

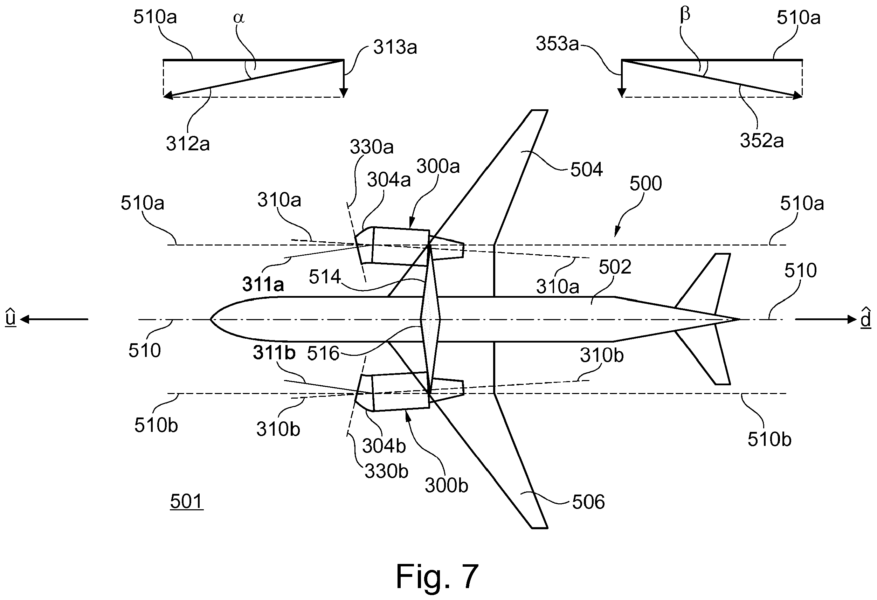

**Figure 7** shows a plan view of an aircraft 500 according to an example. The aircraft 500 is similar to the aircraft 400 of Figure 6; parts of the aircraft 500 are labelled with reference signs which differ by 400 from those labelling corresponding parts of the aircraft 400 of Figure 6. Left and right gas turbine engines 300a, 300b are each as described with reference to Figure 4. Axes 510a, 510b are each parallel to aircraft centreline 510 and coplanar with engine centrelines 310a, 310b respectively. Horizontal plane 501 is fixed in the frame of the aircraft 500 and includes the aircraft centreline 510. The aircraft 500 has upstream and downstream directions **û**, **d̂** respectively.

In the case of engine 300a, a straight line 311a, which is parallel to the geometric centreline of the intake 304a of the engine 300a at the point where the geometric centreline meets the highlight plane 330a, is inclined at an angle α to axis 510a. A unit vector 312a parallel to the line 311a and having a component in the upstream direction **û** also has a component 313a directed towards and normal to a vertical plane, fixed in the frame of the aircraft 500, through the aircraft centreline 510.

The engine centreline 310a is inclined to the axis 510a at an angle β. A unit vector 352a parallel to the engine centreline 310a in the exhaust direction of the engine 300a has a component in the downstream direction **d̂** of the aircraft 500 and also a component 353a directed towards, and normal to, a vertical plane through the aircraft centreline 510.

Each of the angles α, β may have a value of 0.5° of more, for example a value in the range from 1° to 5°. The engine central plane of engine 300a may be normal to the plane 501, or it may be inclined by up to 30° to a plane normal to the plane 501. Engine 300b is a mirror image of engine 300a about the vertical plane through the aircraft centreline 510. A straight line 311b parallel to the geometric centreline of intake 304b at the point where the geometric centreline meets the highlight plane 330b of intake 304b is inclined at the angle α to the axis 510b. The engine centreline 310b is inclined at the angle β to the axis 510b.

Mounting the engines 300a, 300b such that their engine centrelines 310a, 310b are inclined to the vertical plane through the aircraft centreline 510 improves the clearance of the nacelles of the engines 300a, 300b to the wings 504, 506 providing aerodynamic benefits and facilitating nacelle opening for large nacelles. Also, the uncontained rotor trajectories 514, 516 of the engines 300a, 300b, as projected onto the vertical plane through the aircraft centreline 510, are moved forward in the direction **û** compared to the case where the engine centrelines 300a, 300b are parallel to the aircraft centreline 510 (as in the case of the aircraft 400 of Figure 6). This can be used to facilitate more rearward positioning of large engines to reduce wing interface loads.

Although there are only two gas turbine engines described in examples of Figure 6 and 7, in other examples there may be more than two gas turbine engines mounted to an aircraft. For example, an aircraft may comprise four gas turbine engines, with two gas turbine engines mounted on each wing. In some examples, an aircraft may comprise two gas turbine engines mounted to each wing, wherein the two gas turbine engines on each wing have different angles between the geometric centreline of the intake and the engine centreline and/or different angles between the plane normal to the plane of curvature and the engine central plane.

It will be understood that the invention is not limited to the embodiments above-described and various modifications and improvements can be made without departing from the concepts described herein as long as they fall within the scope of the following claims Notation: **x̂** and x̂ denote a unit vector in the positive x-direction.

## Claims

1. A gas turbine engine (300) comprising:
a pylon attachment (312);
a shaft (308) defining an engine centreline (310) which lies in an engine central plane (320) intersecting the pylon attachment;
a fan defining a fan plane (340) normal to the engine centreline; and
an intake (304) upstream of the fan plane, the intake defining a geometric centreline (350), **characterized in that**
the geometric centreline of the intake coincides with the engine centreline at an axial position (306) corresponding to the downstream end of the intake and curves, in a plane of curvature (301), away from the engine centreline upstream of said axial position, the engine central plane being either normal to the plane of curvature or inclined to a plane normal to the plane of curvature by an angle less than or equal to 30°.

2. A gas turbine engine according to claim 1, wherein the geometric centreline of the intake is inclined at an angle of at least 0.5° to the engine centreline at a point where the geometric centreline of the intake intersects the highlight plane of the intake.

3. A gas turbine engine according to any one of the preceding claims, further comprising a nacelle (302) enclosing a fan case, wherein the intake (304) is mounted to the fan case so that an external profile of the nacelle (302) corresponds to an external profile of the intake (304) at an interface (306) between them.

4. A gas turbine engine according to claim 3, wherein the nacelle (302) has a profile at the interface (306) which is non-symmetrical such that the nacelle (302) is handed.

5. An aircraft (400; 500) having an aircraft centreline (410; 510) and comprising left and right gas turbine engines (300a, 300b) each of which is in accordance with any one of the preceding claims, and wherein, for each engine, a unit vector (312a) parallel to the geometric centre line of the intake at the intersection of the geometric centreline with the highlight plane (330a) of the intake (304a), and having a component parallel to the aircraft centreline (410; 510) in the upstream direction of the aircraft, also has a component (313a) directed towards and normal to a vertical plane through the aircraft centreline.

6. An aircraft (400) according to claim 5, wherein the left and right gas turbine engines (300a, 300b) are mounted to the aircraft such that the engine centreline (310a, 310b) of each engine is substantially parallel to the aircraft centreline (410).

7. An aircraft (500) according to claim 5, wherein the left and right gas turbine engines (300a, 300b) are mounted to the aircraft such that, for each engine, a unit vector (352a) which is parallel to the engine centre line (310a, 310b) and in the downstream direction of the engine has a component (353a) normal to and directed towards a vertical plane through the aircraft centreline (510).

8. An aircraft (400; 500) according to any one of claims 5 to 7, wherein the left and right engines (300a, 300b) are mirrored about a vertical plane through the aircraft centreline (410; 510).

## Patentansprüche

1. Gasturbinentriebwerk (300), umfassend:
eine Pylonbefestigung (312);
eine Welle (308), die eine Triebwerksmittellinie (310) definiert, die in einer Triebwerksmittelebene (320) liegt, die die Pylonbefestigung schneidet;
einen Fan, der eine Fanebene (340) senkrecht zur Triebwerksmittellinie definiert; und
einen Einlass (304) stromaufwärts der Fanebene, wobei der Einlass eine geometrische Mittellinie (350) definiert, **dadurch gekennzeichnet, dass**
die geometrische Mittellinie des Einlasses mit der Triebwerksmittellinie an einer dem stromabwärtigen Ende des Einlasses entsprechenden axialen Position (306) zusammenfällt und sich in einer Krümmungsebene (301) weg von der Triebwerksmittellinie stromaufwärts der axialen Position krümmt, wobei die Triebwerksmittelebene entweder senkrecht zur Krümmungsebene ist oder um einen Winkel kleiner als oder gleich 30° zu einer Ebene, die senkrecht zur Krümmungsebene verläuft, geneigt ist.

2. Gasturbinentriebwerk nach Anspruch 1, wobei die geometrische Mittellinie des Einlasses unter einem Winkel von mindestens 0,5° zur Triebwerksmittellinie an einem Punkt geneigt ist, an dem die geometrische Mittellinie des Einlasses die Triebwerkseintrittsflächenebene des Einlasses schneidet.

3. Gasturbinentriebwerk nach einem der vorhergehenden Ansprüche, ferner umfassend eine Gondel (302), die ein Fangehäuse umschließt, wobei der Einlass (304) an dem Fangehäuse montiert ist, so dass ein äußeres Profil der Gondel (302) einem äußeren Profil des Einlasses (304) an einer Grenzfläche (306) zwischen ihnen entspricht.

4. Gasturbinentriebwerk nach Anspruch 3, wobei die Gondel (302) ein Profil an der Grenzfläche (306) aufweist, das nicht symmetrisch ist, so dass die Gondel (302) seitenspezifisch ist.

5. Flugzeug (400; 500), aufweisend eine Flugzeugmittellinie (410; 510) und umfassend linkes und rechtes Gasturbinentriebwerk (300a, 300b), von denen jedes gemäß einem der vorhergehenden Ansprüche ist, und wobei für jedes Triebwerk ein Einheitsvektor (312a) parallel zur geometrischen Mittellinie des Einlasses am Schnittpunkt der geometrischen Mittellinie mit der Triebwerkseintrittsflächenebene (330a) des Einlasses (304a), und mit einer Komponente, die parallel zur Flugzeugmittellinie (410; 510) in der stromaufwärtigen Richtung des Flugzeugs ist, auch eine Komponente (313a) aufweist, die zu einer vertikalen Ebene durch die Flugzeugmittellinie hin und senkrecht zu dieser gerichtet ist.

6. Flugzeug (400) nach Anspruch 5, wobei das linke und das rechte Gasturbinentriebwerk (300a, 300b) so am Flugzeug montiert sind, dass die Triebwerksmittellinie (310a, 310b) jedes Triebwerks im Wesentlichen parallel zur Flugzeugmittellinie (410) ist.

7. Flugzeug (500) nach Anspruch 5, wobei das linke und das rechte Gasturbinentriebwerk (300a, 300b) so am Flugzeug montiert sind, dass für jedes Triebwerk ein Einheitsvektor (352a), der parallel zur Triebwerksmittellinie (310a, 310b) und in der stromabwärtigen Richtung des Triebwerks liegt, eine Komponente (353a) aufweist, die senkrecht zu einer vertikalen Ebene durch die Flugzeugmittellinie (510) liegt und zu dieser hin gerichtet ist.

8. Flugzeug (400; 500) nach einem der Ansprüche 5 bis 7, wobei das linke und das rechte Triebwerk (300a, 300b) um eine vertikale Ebene durch die Flugzeugmittellinie (410; 510) gespiegelt sind.

## Revendications

1. Moteur à turbine à gaz (300) comprenant :
une fixation de pylône (312) ;
un arbre (308) définissant une ligne centrale de moteur (310) qui se trouve dans un plan central de moteur (320) croisant la fixation de pylône ;
une soufflante définissant un plan de soufflante (340) normal à l'axe central de moteur ; et
une admission (304) en amont du plan de soufflante, l'admission définissant une ligne centrale géométrique (350), **caractérisé en ce que**
la ligne centrale géométrique de l'admission coïncide avec la ligne centrale de moteur au niveau d'une position axiale (306) correspondant à l'extrémité en aval de l'admission et s'incurve, dans un plan de courbure (301), en s'éloignant de la ligne centrale du moteur en amont de ladite position axiale, le plan central de moteur étant soit normal au plan de courbure, soit incliné à un plan normal au plan de courbure d'un angle inférieur ou égal à 30°.

2. Moteur à turbine à gaz selon la revendication 1, ladite ligne centrale géométrique de l'admission étant inclinée à un angle supérieur ou égal à 0,5° par rapport à la ligne centrale de moteur au niveau d'un point où la ligne centrale géométrique de l'admission croise le plan saillant de l'admission.

3. Moteur à turbine à gaz selon l'une quelconque des revendications précédentes, comprenant en outre une nacelle (302) renfermant un carter de soufflante, ladite admission (304) étant montée sur le carter de soufflante de sorte qu'un profil externe de la nacelle (302) corresponde à un profil extérieur de l'admission (304) au niveau d'une interface (306) entre elles.

4. Moteur à turbine à gaz selon la revendication 3, ladite nacelle (302) possédant un profil au niveau de l'interface (306) qui n'est pas symétrique de sorte que la nacelle (302) présente une orientation.

5. Aéronef (400 ; 500) possédant une ligne centrale d'aéronef (410 ; 510) et comprenant des moteurs à turbine à gaz gauche et droit (300a, 300b) dont chacun est conforme à l'une quelconque des revendications précédentes, et pour chaque moteur, un vecteur unitaire (312a) parallèle à la ligne centrale géométrique de l'admission au niveau de l'intersection de la ligne centrale géométrique avec le plan saillant (330a) de l'admission (304a), et possédant une composante parallèle à la ligne de centrale d'aéronef (410 ; 510) dans la direction en amont de l'aéronef, possédant également une composante (313a) dirigée vers et perpendiculairement à un plan vertical passant par la ligne centrale de l'aéronef.

6. Aéronef (400) selon la revendication 5, lesdits moteurs à turbine à gaz gauche et droit (300a, 300b) étant montés sur l'aéronef de sorte que la ligne centrale de moteur (310a, 310b) de chaque moteur soit sensiblement parallèle à la ligne centrale d'aéronef (410).

7. Aéronef (500) selon la revendication 5, lesdits moteurs à turbine à gaz gauche et droit (300a, 300b) étant montés sur l'aéronef de sorte que, pour chaque moteur, un vecteur unitaire (352a) qui est parallèle à la ligne centrale de moteur (310a, 310b) et dans la direction en aval du moteur possède une composante (353a) normale et dirigée vers un plan vertical passant par la ligne centrale de l'aéronef (510).

8. Aéronef (400 ; 500) selon l'une quelconque des revendications 5 à 7, lesdits moteurs gauche et droit (300a, 300b) étant l'image miroir l'un de l'autre par rapport à un plan vertical passant par la ligne centrale d'aéronef (410 ; 510).
